# EUROPÄISCHE PATENTANMELDUNG

(11) **EP 1 591 673 A1**
(43) Veröffentlichungstag der Anmeldung: **02.11.2005**
(21) Anmeldenummer: 05008011.8
(22) Anmeldetag: 13.04.2005
(51) Int. Cl.: F16B 12/20

(54) **Verbindungsbeschlag zum Verbinden zweier Möbelteile**

(30) Priorität: 27.04.2004 DE 202004006730 U
(71) Anmelder: Hettich-Heinze GmbH & Co. KG, 32139 Spenge (DE)
(72) Erfinder: Brinkmann, Manfred, 32609 Hüllhorst (DE)
(74) Vertreter: Specht, Peter

(57) **Zusammenfassung**

Gegenstand der Erfindung ist ein Verbindungsbeschlag (1) zum Verbinden zweier Möbelteile (2, 3), umfassend einen in einem ersten Möbelteil (2) festgelegten Dübel (4) und einen im zweiten Möbelteil (3) innerhalb einer quer zur Dübel-Längsachse verlaufenden Sacklochbohrung (6) drehbaren Spannexzenter (5), wobei der Dübel (4) an seinem freien Ende mit einem Spannkopf und der Spannexzenter (5) mit exzentrisch zu seiner Drehachse (10) verlaufenden und den Spannkopf hintergreifenden Spannkurven (9) und mit einer radial verlaufendenden Einführöffnung (8) zum Einführen des Spannkopfes in den Bereich der Spannkurven (9) versehen ist.

Die besondere Gestaltung dieses Verbindungsbeschlages (1) besteht darin, dass der dem Sacklochboden zugewandte untere Bereich des Spannexzenters (5) auf der der Einführöffnung (8) gegenüberliegenden Seite eine gegenüber der kreisförmigen Grundfläche des Spannexzenters (5) hinaus vorsehende Mantelfläche (11) aufweist.

## Beschreibung

Die vorliegende Erfindung betrifft einen Verbindungsbeschlag zum Verbinden zweier Möbelteile, umfassend einen in einem ersten Möbelteil festlegbaren Dübel und einen im zweiten Möbelteil innerhalb einer quer zur Dübel-Längsachse verlaufenden Sacklochbohrung drehbaren Spannexzenter, wobei der Dübel an seinem freien Ende einen Spannkopf und der Spannexzenter mit exzentrisch zu seiner Drehachse verlaufenden und den Spannkopf hintergreifenden Spannkurven und mit einer radial verlaufenden Einführöffnung zum Einführen des Spannkopfes in den Bereich der Spannkurven versehen ist.

Verbindungsbeschläge der vorerwähnten Art sind an sich bekannt und dienen zur schnellen und problemlosen Verbindung zweier Möbelteile.

Der Dübel eines derartigen Verbindungsbeschlages wird in einem ersten Möbelteil festgelegt und durchtritt das zweite Möbelteil im Bereich einer Bohrung, die sich bis in die Sacklochbohrung des zweiten Möbelteiles erstreckt. Dabei ragt der Spannkopf des Dübels bis in den Bereich der Grundfläche der Sacklochbohrung hinein.

In dieser Sacklochbohrung ist in einer Vormontagestellung der Spannexzenter derart eingesetzt, dass seine Einführöffnung dem Spannkopf des Dübels gegenüber liegt, so dass beim Zusammenfügen der beiden miteinander zu verbindenden Möbelteile in einer ersten Position - ohne dass es hierbei schon zu einer Verbindung kommt - der Spannkopf innerhalb des Einführbereiches des Spannexzenters liegt. Wird nun der Spannexzenter um seine Drehachse gedreht, hintergreifen dessen Spannkurven den Spannkopf des Dübels, wodurch die beiden Möbelteile gegeneinander angezogen und fest miteinander verbunden werden.

Bei den bekannten Verbindungsbeschlägen weist der Spannexzenter eine insgesamt kreisrunde Außenkontur oder Außenmantelfläche auf. Da im Übergangsbereich zwischen der Sacklochbohrung einerseits und der Bohrung, die vom Dübel durchtreten wird, andererseits relativ wenig Material vorhanden ist, kommt es bei herkömmlichen Verbindungsbeschlägen der gattungsgemäßen Art zur unangenehmen Erscheinung, dass sich der Spannexzenter beim Anziehen der beiden Möbelteile zueinander in der Sacklochbohrung verkantet. Damit liegt die Oberfläche des Spannexzenters nicht mehr parallel zur entsprechenden Fläche des zweiten Möbelteiles, was nicht nur optisch nachteilig ist, sondern auch dazu führen kann, dass die Oberfläche des zweiten Möbelteiles in dem Bereich, in dem der Spannexzenter besonders an die Laibung der Sacklochbohrung angepresst wird, beschädigt wird.

Der vorliegenden Erfindung liegt die Aufgabe zugrunde, einen Verbindungsbeschlag der gattungsgemäßen Art so zu gestalten, dass der Spannexzenter auch im Spannzustand praktisch verkantungsfrei innerhalb der Sacklochbohrung liegt.

Diese Aufgabe wird erfindungsgemäß dadurch gelöst, dass der dem Sacklochboden zugewandte untere Bereich des Spannexzenters auf der der Einführöffnung gegenüberliegenden Seite eine gegenüber der kreisförmigen Grundfläche des Spannexzenters hinaus vorstehende Mantelfläche aufweist.

Diese Mantelfläche gelangt beim Drehen des Spannexzenters aus der Vormontageposition heraus in seine Spannposition sofort in den Übergangsbereich zwischen der Sacklochbohrung und der vom Dübel durchtretenden Bohrung des zweiten Möbelteiles und wird aufgrund seines "Übermaßes" sofort gegen den zwar geschwächten, aber dennoch vorhandenen Laibungsbereich der Sacklochbohrung angepresst und drückt sich über den ursprünglichen Durchmesser der Sacklochbohrung hinaus in diesen Laibungsbereich hinein, so dass der Spannexzenter bei Einleitung des Spannvorganges sehr gut abgestützt und somit verkantungsfrei in der Sacklochbohrung gehalten ist. Ein Kippen des Spannexzenters mit den damit verbundenen unangenehmen Folgen wird somit sicher vermieden.

Ein Ausführungsbeispiel der Erfindung ist in den beigefügten Zeichnungen dargestellt und wird im folgenden näher beschrieben.

### Es zeigen:

- Figur 1: eine perspektivische Darstellung eines aus einem Dübel und einem Spannexzenter bestehenden Verbindungsbeschlages, wobei der Dübel in einem ersten Möbelteil festgelegt ist.

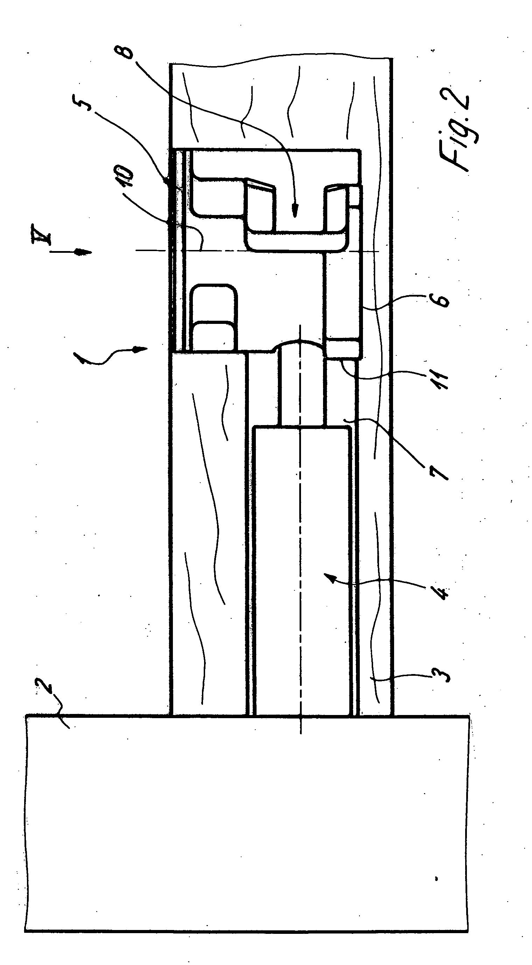

- Figur 2: einen schematisch dargestellten Schnitt durch den Verbindungsbereich zweier über den Verbindungsbeschlag miteinander verbundenen Möbelteile

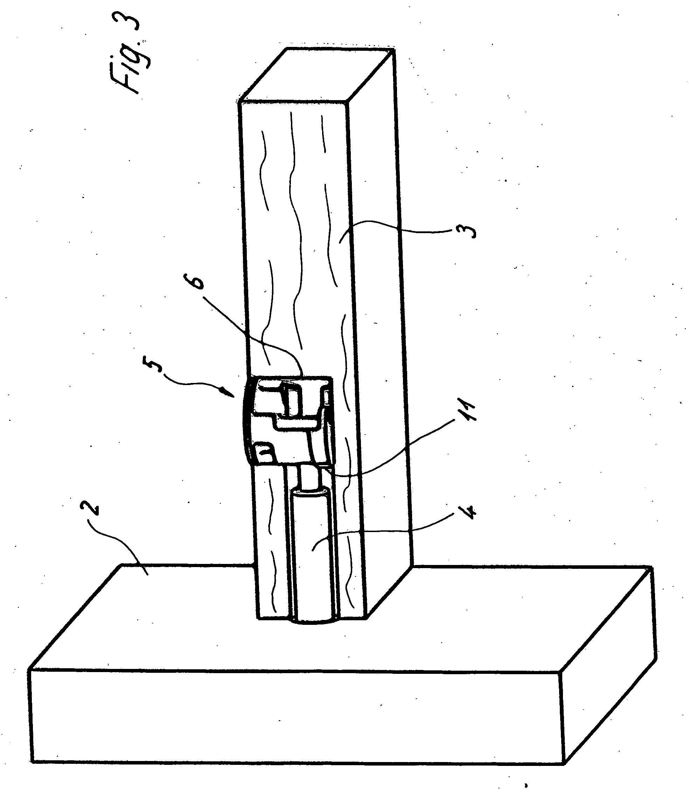

- Figur 3: eine perspektivische Darstellung des Verbindungsbereiches gemäß Figur 2

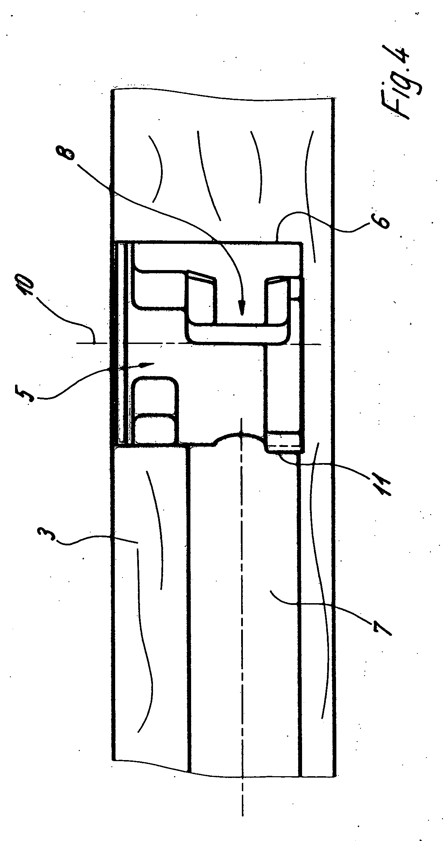

- Figur 4: einen Teilschnitt durch ein zweites Möbelteil mit einer Sacklochbohrung und einem in die Sacklochbohrung eingesetzten Spannexzenter

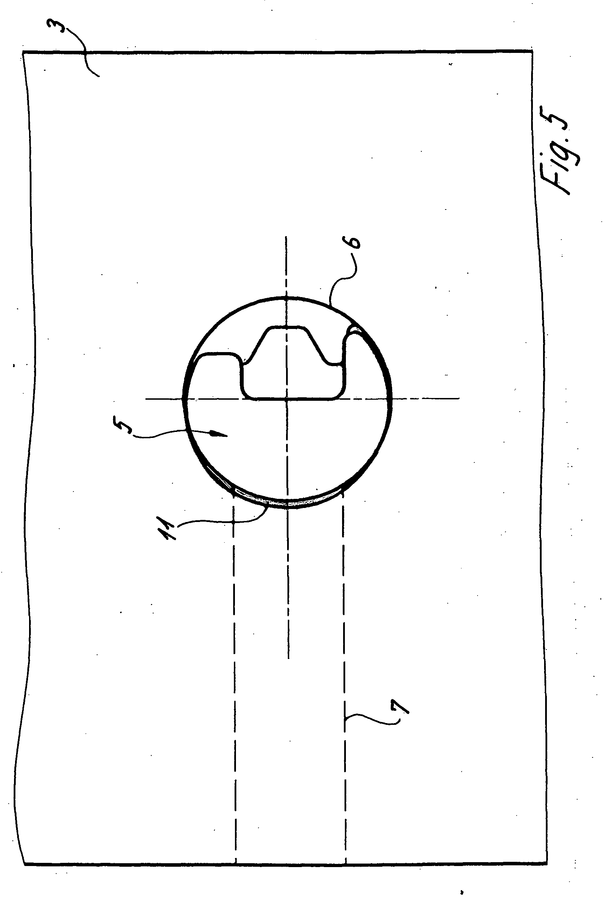

- Figur 5: eine Ansicht in Richtung des Pfeiles V in Figur 2

In den Zeichnungen ist mit dem Bezugszeichen 1 insgesamt ein Verbindungsbeschlag zum Verbinden zweier Möbelteile 2 und 3 bezeichnet, wobei der Verbindungsbeschlag 1 aus einem Dübel 4 und einem Spannexzenter 5 besteht.

Bekannterweise wird der Dübel 4 an einem ersten Möbelteil 2 festgelegt, beispielsweise durch Einschrauben oder Einschlagen dieses Dübels 4 in das erste Möbelteil 2.

Der Spannexzenter 5 wird in eine Sacklochbohrung 6 des zweiten Möbelteiles 3 eingesetzt.

Eine von einer Stirnseite des zweiten Möbelteiles 3 ausgehende Bohrung 7 mündet in die Sacklochbohrung 6 ein, und zwar etwa im Bereich des Bodens des besagten Sackloches 6. Diese Bohrung 7 wird von dem Dübel 4 durchtreten, der mit seinem freien Ende bis in den Bereich der Sacklochbohrung 6 hineinragt. An diesem freien Ende trägt der Dübel 4 in an sich bekannter und deshalb nicht weiter dargestellter Weise einen Spannkopf.

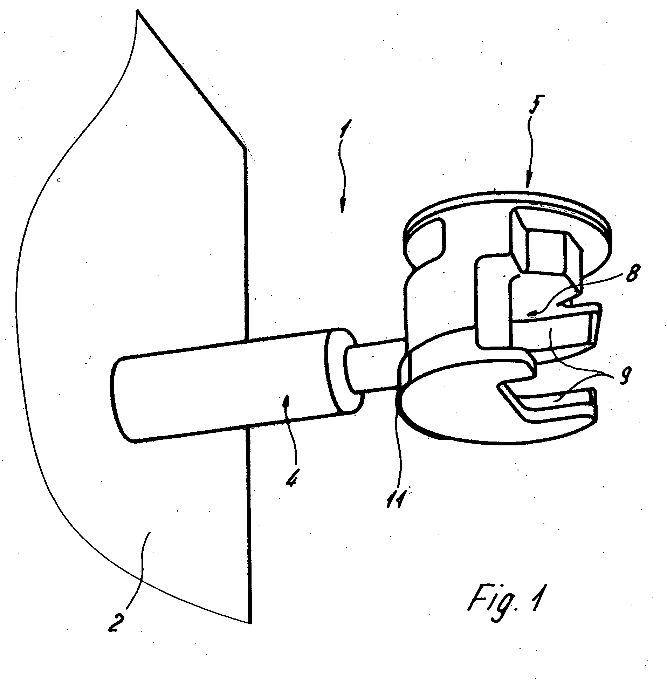

Der Spannexzenter 5 ist, was insbesondere Figur 1 sehr deutlich zeigt, mit einer Einführöffnung 8 versehen, welche das Einführen des vorerwähnten Spannkopfes in den Bereich von Spannkurven 9 des Spannexzenters 5 ermöglicht, welche in an sich bekannter Weise exzentrisch zur Drehachse 10 des Spannexzenters 5 verlaufen.

Zur Verbindung der beiden Möbelteile 2 und 3 wird zunächst der Dübel 4 am ersten Möbelteil 2 festgelegt und der Spannexzenter 5 in die Sacklochbohrung 6 des zweiten Möbelteiles 3 eingesetzt. Dabei erfolgt das Einsetzen des besagten Spannexzenters 5 derart, dass die Einführöffnung 8 mit der Dübel-Längsachse fluchtet und somit dem Spannkopf des Dübels 4 gegenüberliegt, wenn dieser Dübel 4 durch die Bohrung 7 in das zweite Möbelteil 3 eingeschoben wird. Liegen die beiden Möbelteile 2 und 3 aneinander, kann nun der Spannexzenter 5 um seine Drehachse 10 verdreht werden, wobei dann die Spannkurven 9 den Spannkopf des Dübels 4 hintergreifen und aufgrund der Exzentrität der Spannkurven 9 die beiden Möbelteile 2 und 3 fest aneinander ziehen. Diese Verbindungstechnik ist an sich allgemein bekannt.

Die Besonderheit des vorliegenden Verbindungsbeschlages 1 liegt darin, dass der Spannexzenter 5, der generell eine kreisrunde Grundfläche aufweist, in seinem dem Sacklochboden zugewandten unteren Bereich auf der der Einführöffnung 8 gegenüberliegenden Seite eine gegenüber der kreisförmigen Grundfläche hinaus vorstehende Mantelfläche 11 aufweist. Diese geringfügig über die Grundfläche des Spannexzenters 5 hinaus vorstehende Mantelfläche 11 wird beim Drehen des Spannexzenters 5 um seine Drehachse 10 im Sinne eines Spannens an den Laibungsbereich des Sackloches 6 angepresst, die im Übergangsbereich zwischen der Sacklochbohrung 6 und der Bohrung 7 liegt. Beim weiteren Spannen drückt sich diese Mantelfläche 11 immer stärker in den besagten Laibungsbereich hinein und stützt den Spannexzenter 5 sicher ab, so dass dieser innerhalb der Sacklochbohrung 6 nicht verkanten oder kippen kann.

Somit bleibt die konzentrische Lage des Spannexzenters 5 zur Sacklochbohrung 6 erhalten, so dass auch die Oberfläche des Spannexzenters 5 in einer Parallellage zur Oberfläche des zweiten Möbelteiles 3 liegt.

Die wie erwähnt vorspringende Mantelfläche 11 kann dabei ohne weiteres Teilabschnitt eines exzentrisch zur Kontur des Spannexzenters 5 im übrigen verlaufenden Zylinderabschnittes sein, die zu der der Einführöffnung 8 des Spannexzenters 5 gegenüberliegende Seite vorspringt.

Durch die beschriebene Gestaltung des Spannexzenters 5 wird sichergestellt, dass der Spannexzenter 5 insbesondere beim Anziehen an den Dübel 4 bzw. dessen Spannkopfes umfangseitig so abgestützt ist, dass ein Verkanten des Spannexzenters 5 innerhalb der Sacklochbohrung 6 sicher vermieden ist. Die hierfür erforderliche geringfügige Formänderung des Spannexzenters 5 in seinem unteren, dem Sacklochboden zugewandten Bereich ist fertigungstechnisch einfach realisierbar, da es sich bei Spannexzentern 5 üblicherweise um Druckgussteile handelt.

## Patentansprüche

1. Verbindungsbeschlag (1) zum Verbinden zweier Möbelteile (2, 3), umfassend einen in einem ersten Möbelteil (2) festlegbaren Dübel (4) und einen im zweiten Möbelteil (3) innerhalb einer quer zur Dübel-Längsachse verlaufenden Sacklochbohrung (6) drehbaren Spannexzenter (5), wobei der Dübel (4) an seinem freien Ende mit einem Spannkopf und der Spannexzenter (5) mit exzentrisch zu seiner Drehachse (10) verlaufenden und den Spannkopf hintergreifenden Spannkurven (9) und mit einer radial verlaufenden Einführöffnung (8) zum Einführen des Spannkopfes in den Bereich der Spannkurven (9) versehen ist, **dadurch gekennzeichnet, dass** der dem Sacklochboden zugewandten untere Bereich des Spannexzenters (5) auf der der Einführöffnung (8) gegenüberliegenden Seite eine gegenüber der kreisförmigen Grundfläche des Spannexzenters (5) hinaus vorstehende Mantelfläche (11) aufweist.

2. Verbindungsbeschlag nach Anspruch 1, **dadurch gekennzeichnet, dass** die Mantelfläche (11) Teil eines gegenüber dem Spannexzenter (5) im übrigen exzentrisch verlaufenden Zylinderabschnittes ist.

3. Verbindungsbeschlag nach Anspruch 1 oder 2, **dadurch gekennzeichnet, dass** der Spannexzenter (5) insgesamt einstückig als Druckgussteil ausgebildet ist.
